(19) Europäisches Patentamt
European Patent Office
Office européen des brevets

(11) **EP 2 783 283 B1**

(12) **EUROPEAN PATENT SPECIFICATION**

(45) Date of publication and mention
of the grant of the patent:
**06.03.2019 Bulletin 2019/10**

(51) Int Cl.:
**G06F 9/38** (2018.01)    **H04L 29/06** (2006.01)
**H04L 29/08** (2006.01)

(21) Application number: **12844326.4**

(22) Date of filing: **24.10.2012**

(86) International application number:
**PCT/AU2012/001296**

(87) International publication number:
**WO 2013/059864 (02.05.2013 Gazette 2013/18)**

(54) **MOBILE CONTENT DELIVERY METHOD AND DEVICE WITH RECOMMENDATION-BASED PRE-FETCHING**

MOBILES INHALTSAUSGABEVERFAHREN UND GERÄT MIT VORABLADUNG AUF EMPFEHLUNGSBASIS

MÉTHODE ET APPAREIL DE DISTRIBUTION DE CONTENU MOBILE AVEC PRÉ-EXTRACTION BASÉE UNE RECOMMANDATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.10.2011  AU 2011904383**

(43) Date of publication of application:
**01.10.2014  Bulletin 2014/40**

(73) Proprietor: **Incoming Pty Ltd**
**Eveleigh, NSW 2015 (AU)**

(72) Inventors:
  • PETANDER, Lars, Henrik
    Eveleigh, New South Wales 2015 (AU)
  • OTT, Maximilian
    Eveleigh, New South Wales 2015 (AU)
  • HITCHING, Robert
    Eveleigh, New South Wales 2015 (AU)
  • MAZIERE, Yorick, Georges
    Eveleigh, New South Wales 2015 (AU)
  • PETTERSON, James
    Eveleigh, New South Wales 2015 (AU)
  • WEBERS, Christfried
    Eveleigh, New South Wales 2015 (AU)
  • CAETANO, Tiberio, Silva
    Eveleigh, New South Wales 2015 (AU)
  • VAN DE VEN, Joop, Johannes, Wilhelmus
    Eveleigh, New South Wales 2015 (AU)
  • NOEL, Joseph, Christian, Gruba
    Eveleigh, New South Wales 2015 (AU)

(74) Representative: **Abel & Imray**
**Westpoint Building**
**James Street West**
**Bath BA1 2DA (GB)**

(56) References cited:
WO-A1-2010/116652    US-A1- 2003 126 232
US-A1- 2006 277 308    US-A1- 2008 045 172
US-A1- 2010 005 046    US-B1- 6 385 641

**Description**

Technical Field

This invention relates to the prefetching of content items, for example, prefetching of videos onto a mobile device. In particular, this invention relates but is not limited to a computer implemented method, software and system for prefetching of content items.

Background Art

While data rates in wireless networks are increasing, the maximum possible data rate is not always available to a user of a mobile device, such as a smart phone. This reduction in data rate may be due to high speed of the user, objects between the device and a base station, reflections off buildings or a large number of users served by the same base station.

As a result, it cannot be guaranteed that content items which require a high data rate, such as video live streams, are loaded quickly enough to allow the user to access the video shortly after the user has selected the video. Such a delayed start of the video causes user frustration and abandoning of the service providing the content. Some content providers choose to not at all offer their content to mobile devices instead of risking such user frustration.

Additionally, most mobile networks have spare off-peak capacity and network operators would increase capital efficiency by using this spare capacity. A solution to both problems is to prefetch content items and store them on the mobile device. However, managing the prefetching of content items is difficult since typically more content items are available than can reasonably be downloaded.

US 2010/0005046 relates to a method and apparatus for predicting value of caching content items. In particular, this document discloses a step of determining a probability of use of the content item comprising a probability that the content item will be used if cached. This document further discloses steps of determining a value of caching the content item, and computing a caching value estimate associated with the content item using the probability of use of the content item and the value of caching the content item. The content items to be cached may then be selected using the respective caching value estimates of the content items.

Any discussion of documents, acts, materials, devices, articles or the like which has been included in the present specification is not to be taken as an admission that any or all of these matters form part of the prior art base or were common general knowledge in the field relevant to the present disclosure as it existed before the priority date of each claim of this application.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

Disclosure of Invention

In a first aspect there is provided a computer-implemented method according to claim 1 for prefetching one of multiple content items onto a mobile device to make the content item accessible from a local data store of the mobile device.

It is an advantage that the content item is selected based on the access time, the benefit values and the prefetching cost. As a result, the prefetching can be managed such that the most useful content item which the user will likely access soon are downloaded while at the same time minimising the cost.

Step (c) may comprise selecting the content item such that a combined measure of cost and benefit is optimised.

The computer-implemented method may further comprise:

receiving historic network status data including time-based download costs,
wherein step (b) comprises determining for each of the multiple content items multiple estimated prefetching costs associated with respective multiple prefetching times based on the historic network status data.

The prefetching cost may be based on a network policy.

Step (b) may further comprise determining multiple prefetching costs for each of the multiple content items, each of the multiple prefetching costs being associated with one of the multiple prefetching times.

Step (b) may comprise determining an earlier prefetching cost and a later prefetching cost for each of the multiple content items, the earlier prefetching cost being associated with an earlier prefetching time and the later prefetching cost being associated with a later prefetching time; and

step (c) may comprise selecting one of the multiple content items such that a first content item is selected over a second content item where the first content item has a combined measure of benefit and cost above a predetermined threshold associated with an access time before the later prefetching time and the second content item has a combined measure of benefit and cost above a predetermined threshold associated with an access time after the later prefetching time.

The prefetching cost may be based on a monetary cost. The prefetching cost may be based on an energy cost.

Step (a) may further comprise:

receiving feature data including a set of features for describing content items and including for each feature of the set of features a feature weight associated with an access time;

receiving content data, including for each of the multiple content items one or more features of the set of features; and

determining for each of the multiple content items the benefit value based on the feature weight for each feature of the set of features.

The computer-implemented method may further comprise:

receiving for each feature and each of multiple contexts a feature context weight associated with that context, the feature context weight indicating how likely a feature is accessed by the user in that context;

receiving for each context a context weight associated with an access time, the context weight indicating how likely the context occurs at the associated access time; and

determining for each feature and for each context based on the context weight and the feature context weight a feature weight associated with an access time, the feature weight indicating how likely the user will access content items with that feature in each of the contexts.

The computer-implemented method may further comprise:

receiving historic user access data including sensor data associated with access times when content items were accessed; and

determining contexts and context weights based on the sensor data, each of the context weights being associated with an access time.

The historic user access data may include features of accessed content items and the method may further comprise determining based on the received features and the determined contexts for each feature and for each context a feature context weight.

The method may further comprise:

receiving features of content items stored on the local data store; and

reducing the benefit value for content items to be prefetched based on the received features.

The benefit value may be based on a creation date of the content item.

One or more of the multiple content items may be advertisement.

The computer-implemented method may further comprise downloading the selected content item.

According to a further aspect there is provided a mobile device according to claim 14 for prefetching one of multiple content items onto the mobile device to make the content item accessible from a local data store of the mobile device.

Optional features described of any aspect, where appropriate, similarly apply to the other aspects also described here.

Brief Description of Drawings

An example will be described with reference to

Fig. 1 illustrates a computer system for prefetching of content items.
Fig. 2 illustrates a typical computer network.
Fig. 3 illustrates an exemplary data structure of feed.
Fig. 4 illustrates a computer-implemented method for prefetching one of multiple content items.
Fig. 5 illustrates a method for determining benefit values.
Fig. 6 illustrates a method for determining feature weights.
Fig. 7 illustrates a parameter space spanned by the data from two sensors.
Fig. 8 illustrates an example schedule of a weekday in the life of a user.
Fig. 9 illustrates a graphical user interface of a video application.

Best Mode for Carrying Out the Invention

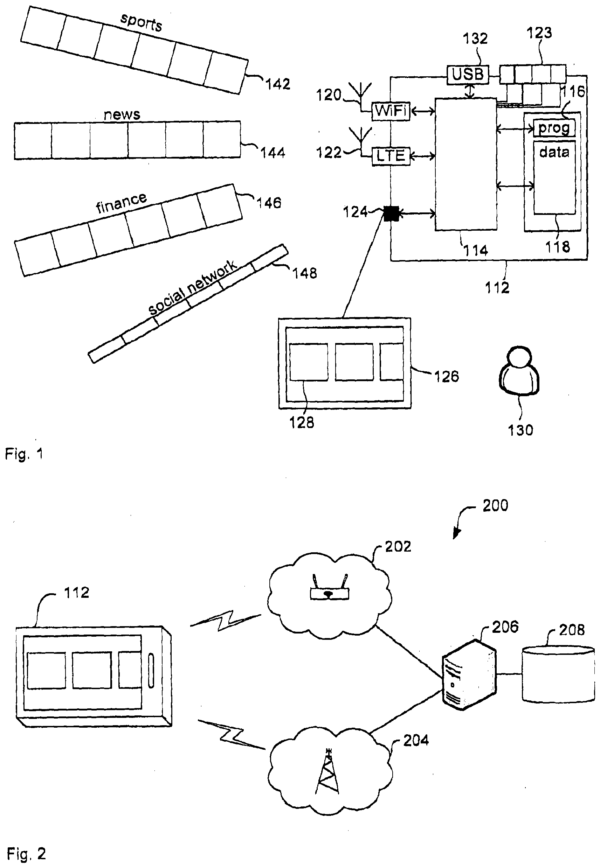

Fig. 1 illustrates a computer system 112 for prefetching of content items. The computer system 112 may be a mobile communication device 112, such as a smart phone or tablet computer, comprising a processor 114, a program memory 116 and a data memory 118. The computer system 112 further comprises several data ports, such as a wireless LAN interface 120 and a wireless telecommunication interface 122, for example, an LTE transceiver. Any other wireless interface may also be used in addition to or as an alternative to the above interfaces. Examples are 3G, WiMax and Bluetooth.

The computer system 112 also comprises a sensor array 123 with a variety of sensors for identifying the current context. The sensor array 123 may include a time module, a GPS module, an accelerometer, a compass or gyroscope, a light or brightness sensor, a noise sensor, a detector of a charging power supply, a battery monitor, a headphone detector combined with a headphone jack, a thermometer, cellular or WLAN signal strength sensor, a sensor to detect nearby Bluetooth devices or any other context sensor. The sensor array 123 may also comprise connections to local sensors located on or near the user, such as heart-rate monitors embedded in chest straps or clothing, or EEG monitors. Sensor array 123 may further comprise software sensors, such as battery lovol and changing status, a list of installed as well as active applications and used and free memory,

Further, the system may use data from remote sensors, such as the availability of spare network capacity in cellular networks to detect opportunities for prefetching over cellular or status information for nearby devices, provided wirelessly. Other sources for remote sensors may be users and their devices nearby, or have been in the same vicinity some time ago and allowing others, such as friends, or those willing to exchange data, to obtain all, or parts of their sensor streams.

Yet, other remote sensor streams may come from services available at a location, such as crowd information, or other service updates, such as weather conditions, traffic conditions, or train delays or any other information which may affect a user's decision on what to do next. Examples of user actions are information about how the user interacts with its environment. Examples include which application or service a user interacts and how. For instance, user actions on mobile devices include the URLs of web services accessed, and further session information, such as user session length, user content consumption behaviour, such as viewing a piece of content partially or fully once or multiple times, rewinding, fast forwarding, pausing or stopping a video or music clip, and any other interaction with the device or the user interface, For low frequency context data, such as battery level indicator or location information, the data itself is used. For higher frequency data, such as accelerometer or sound, time or frequency domain metrics are extracted from the raw data for use in context analysis. An example of such a metric is the frequency spectrum of the data. These features are then stored in data memory 118.

The computer system 112 further comprises a display port 124 to connect the processor 114 with a screen 126 to display content items 128 to user 130. This screen may be a touch screen and may therefore provide input means, such that the processor 114 receives user input through display port 124. In one example, the computer system also comprises a wire-based interface 132, such as a USB port.

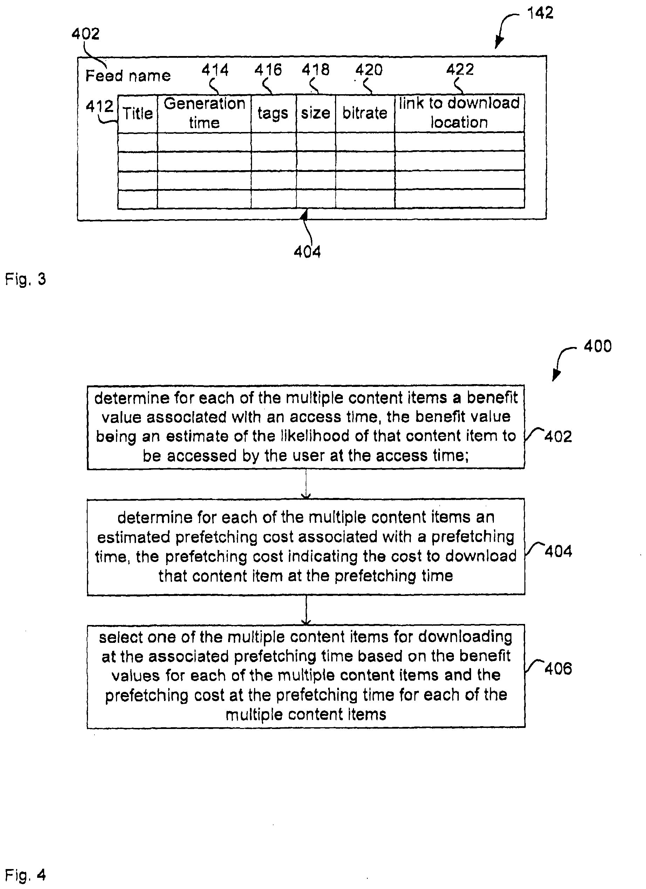

Software stored on program memory 116 causes the processor 114 to perform the method in Fig. 4, that is, the processor selects one of multiple content items for downloading as described below.

Fig. 2 illustrates a typical computer network 200 comprising computer system 112, such as a tablet computer, a Wifi network 202 and a telecommunications network 204, such as an LTE network. The Wifi network 202 and telecommunications network 204 connect the tablet computer 112 to a content server 206 that is connected to a content database 208. The content database 208 stores content items that may be accessed by the user 130 of the tablet computer 112. The content database 208 also stores meta-data associated with the content items, such as title, author, creator, description, popularity and persons who liked the content. Content items may be video files, audio files, images, websites, application software or advertisements in the form of audio or video files. Of course, any other type of content item may also be stored on content database 208 and files may be provided in stream format. In one example, content items are stored on content database 208 as various copies with different parameters, such as resolution, frame rate, compression ratio, compression algorithm or operation system (iOS/Android). In a different example, the content server 206 creates copies with different parameters from a single master copy "on the fly", that is, when the copies are requested. In another example, the content server 206 may be connected to multiple databases 208 providing access to content files from different content providers.

Typically, the user 130 subscribes to a telecommunication service provided by a service provider, such as a mobile phone contract, and the service includes data transmission over the telecommunications network 204, such as LTE or 3G. Such data transmission is continuously available to the user with variable available data rates.

Additionally, the user 130 has access to a variety of secondary data services, such as Wifi network 202, that are available intermittently. Examples of such secondary data services are public Wifi networks at bars, restaurants, airports or the user's workplace. Since these Wifi networks are not managed by a service provider, they are referred to as opportunistic Wifi networks.

A different class of Wifi networks are managed Wifi networks which are managed by a service provider which may be the same or different to the service provider providing the telecommunications service or the provider of the content server 206. In the case of managed Wifi networks, the user has an account with the provider of the managed Wifi network.

In any case, the computer system 112 accesses the different Wifi networks automatically without the user having to select a network or to initiate a search for networks. Of course, user settings stored on data memory 118 may determine which networks are to be used.

Similar to the computer system 112, the content server 206 comprises a processor, program memory and data memory. Software on the program memory causes the processor of the content server 206 to perform various methods for providing content to the user 130, optimising content delivery and analysing content access by user 130 and other users.

The description above shows that the networks and data rates available to the user 130 vary significantly. Instead of beginning to download a content item 128 at the time the user 130 accesses the content item 128, the processor 114 predicts when the user 130 will access the content item 128 and starts downloading the content item 128 in advance. This is referred to as prefetching.

In the example of Fig. 1, the processor 114 receives four different feeds of recommended content items: a sports feed 142, a news feed 144, a finance feed 146 and a social network feed 148. Each feed contains a number of content items, such as videos represented in Fig, 1 by adjoining squares. In this example, the user 130 has subscribed to the three feeds 142, 144 and 146 with the content provider 206 and as a result, the user is likely to select videos from these feeds. For simplicity, "content item" is used here as denoting the feature data and other data of the content item but not necessarily the video payload. This means that the processor 114 only receives a small amount of meta-data, such as 1KB of tags and the size of the video, instead of 300MB of video payload.

Fig. 3 illustrates an exemplary data structure of feed 142. In this example, a feed is a list of content items with features, such as meta data, for each item which describes the content item as explained with reference to the content database 208 in Fig. 2. The feed also provides all the relevant information available to the source of the feed, such as a content provider or a social network service. The content server may further annotate the feed with extra information not available to the original source of the feed.

The recommendation feed 142 comprises a feed name 302, such as "sport" and a list 304 of feed items. Although a list data format is used for clarity here and in other examples further below, it is to be understood that more sophisticated database structures, such as a MySQL database or any other relational database or a tree or graph structure, may be used to store content items. The feed could have references to external objects such as a URL pointing to the list of actors or other content directed by the same director. The referred information could already be stored locally in the device , thus allowing more efficient transfer of the information or it could be on a remote server and retrieved only if necessary.

Each feed item may consist of a set of features, such as meta-data describing the feed item. The meta-data can be organised as a set of key value pairs, in which values may be references to other information, stored locally or remotely. The references create an information graph. The features may also consist of key value pairs that are extracted out of the meta data. The values can be absolute values or references to other information, stored locally or remotely. In this example, each feed item has a title 312, such as "Champions League Final - highlights", a generation time 314, which indicates when the video was recorded or the event has taken place, a comma separated list of one or more tags 316, such as "Barcelona, Manchester United", a size 318, such as 100MB, a bitrate 320, such as 1.5 Mbit/s and a link 322 to the download location of the video, such as http://videoproviderX.com/cl_final_2011. The feed 142 may also contain an image representing a preview or snapshot of the video.

Referring back to Fig. 1, a fourth feed is the social network feed 148. Unlike the sports, news and finance feeds 142, 144 and 146, the social network feet 148 is not provided by the content provider but by a social network provider. Since the social network provider does not store the videos, the social network feed 148 is illustrated somewhat slimmer than the other feeds 142, 144 and 146. The social network feed 148 comprises content items which friends or connections in the user's social network have accessed or recommended, such as by clicking a "like" link. Of course, different feeds are also possible, such as a feed from an online store based on products recently purchased by the user 130,

Fig. 4 illustrates a computer-implemented method 400 for prefetching one of multiple content items of the feeds onto a mobile device. As a result of the method, the content item can be made accessible from the local data store 118 of the mobile device. The following description explains the method 400 in relation to videos, but as mentioned earlier, other content items may equally be prefetched.

The method 400 commences by determining 402 for each of the multiple content items a benefit value. This benefit value is associated with an access time and is an estimate of the likelihood of that content item is accessed by the user at the access time.

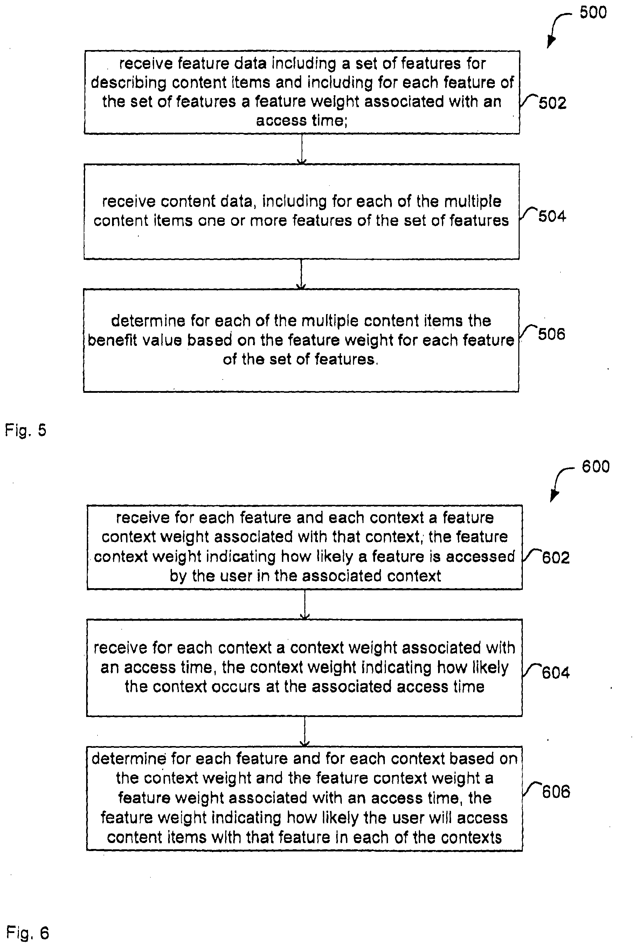

Fig. 5 illustrates a method for determining these benefit values as performed by processor 114. The processor 114 receives 502 feature data which includes a set of features for describing the content items. The set of features may be the names of the recommendation feeds, such as "sport" or "news", or tags which are used to tag the videos, such as "goals" or "interview".

The feature data further comprises a feature weight for each feature associated with an access time. The feature weight may be normalised such that all feature weights are between zero and one. In one example, the feature data is stored on a data store as an SQL database with multiple records. Each record has fields for a feature name, a cyclical time and the feature weight. For example, the feature data includes feature "news" for cyclical time "morning" with weight 0.95 and for "afternoon with weight 0.01. This indicates that the user 130 is much more likely to access news items in the morning than in the evening.

Fig. 6 illustrates a method performed by processor 114 for determining these feature weights. The processor receives 602 a context weight for each of multiple contexts in which the user has accessed previous content items. For example, the context weight indicates that the user 130 is likely to access "news" items when the user commutes by bus to work in the morning. One particular feed may have a high initial feature weight that is set by the network operator or content provider. This weight will then be adjusted over time as the user 130 accesses more content items.

In one example, the processor 114 receives sensor data from sensors 123 and automatically determines contexts based on the sensor data.

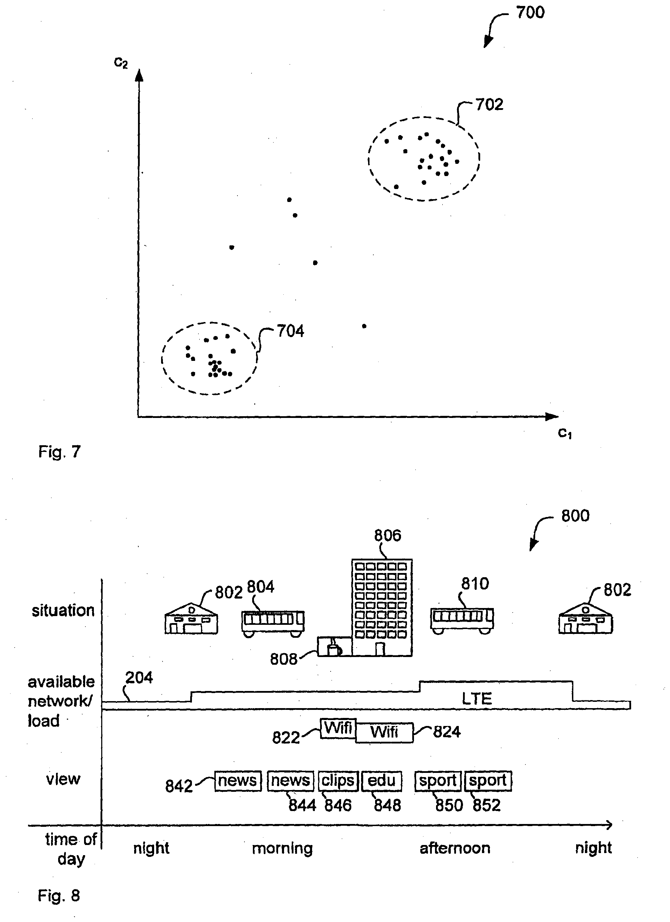

Fig. 7 illustrates a parameter space 700 spanned by the data from two sensors $c_1$ and $c_2$, The points in parameter space 700 are samples of historic user access data including sensor data at times when a content item has been accessed or when another event has triggered the capturing of sensor data. In this example, the sensor data is accelerometer data and compass data. In different examples, the context parameter is a timestamp, a geographical location, such as determined by a GPS receiver integrated into computer system 112, LTE and 3G cell identifiers, cyclical time, power state, headphone presence and brightness. The sensor data may also include information that friends of the user 130 are in the vicinity of user 130, such as within range of near field communication (NFC) or Bluetooth. Of course, any combination of these sensors may be used.

The parameter space 700 is a two-dimensional space for illustration purposes only and it is to be understood that more dimensions are possible. In most cases, the number of dimensions is identical with the number of sensors used by the processor 114. However, the number of dimensions or the number of features may be reduced to decrease computational complexity, such as by Principal Component Analysis of the sensor data or the features.

In the example of Fig. 7, the processor 114 determines a first context 702 and a second context 704 as the centres of respective clusters of sampled sensor data, such as by performing a k-means algorithm, K---Nearest Neighbors algorithm or an expectation-maximization algorithm. For predicting occurrences of the combinations of features Dynamic Bayesian Networks algorithms may be used. The used algorithm and its parameters are adapted to maximize the accuracy of the predictions while minimizing the costs.

The context collection and analysis service performs the adaptation by taking into account all the relevant variables, including but not limited, to the capabilities of the device, available context information, available battery, and the utility of accurate predictions. These parameters are used to calculate an optimal combination of algorithms, parameters and required inputs. This calculation can be performed using for example constraint programming,

The required inputs are then used to derive the parameters for adapting the context collection and preprocessing into metrics. For example, if a user views very little content then the utility of having very accurate predictions of when situations in which the user will access content will occur would be lower than the cost of predicting the situations with a very high accuracy. Another example would be a user who consumes a lot of content, but does not charge the device often. In this case, the accuracy of the prediction would have a very high utility to ensure that the user will have both enough content to consume and enough battery to consume the content and the system would have enough battery to prefetch the required content before the next time the device is charged.

One of the embodiments of determining benefit values of content items uses a heuristic algorithm, which combines a feature based classification algorithm such as Naïve Bayesian together with heuristic weightings for different sources for the recommendations and freshness of the content. Naive Bayesian classification treats each feature of the metadata associated with the content item, e.g. email of the sender, each word in a title, as an independent feature. Then a conditional probability of the user viewing or liking the content is calculated as a multiplication of the conditional probabilities of the user accessing or liking the content for every single feature.

Feature extraction for the calculation of the conditional probabilities is discussed more later and the Naïve Bayesian algorithm is discussed more in [1]. The weights in the algorithm are calculated in a way that favours more personal recommendation feeds and disfavours more generic recommendation feeds. For example, recommendations coming from the friends of a user are scored higher than general, non---personalized, recommendations from content providers. The basis of the scores is revealed to the user in the content viewing interface (42). For example, a "tag cloud" is shown to the user with more important features being displayed in larger text. The user can then confirm or reject the features used for a recommendation,

In the case of Naïve Bayesian classification, all text in the metadata is broken down into individual words with so---called stop words, i.e. very short or non---meaningful words, removed and each word stemmed to its base form. In addition to features of the content, such as title, description and comments text, social connections of the content to the user can be included in the classification. For example, the social network ID of the recommender, IDs of people who commented on the content or liked the content or IDs of people featured in the content. After all the features have been extracted, a conditional probability of the user viewing or liking the content is calculated as a multiplication of the conditional probabilities of the user accessing or liking the content for every single feature. This calculation is described in detail in [1].

The first context 702 may be the context of the user travelling to work by bus, which can be recognized from distinct patterns in the accelerometer samples resulting from a combination of vibrations from the bus engine and its tires on a rough road surface. It is noted that the processor 114 does not need to determine the real-world environment of each cluster, but it is sufficient to store cluster identifiers and boundaries between clusters.

The processor 114 assigns a context identifier to each context and counts the number of times each feature is accessed by the user while in that context. For example, the user watches five videos from the news feed that are tagged with "interview" while the user travels by bus, The processor 114 then adds five to the count of the features "news" and "interview" in context 702, This means that the processor 114 maintains separate feature counts for each of the contexts 702 and 704. The processor 114 determines based on the feature count a feature context weight, such as by normalizing the feature count to a number between zero and one. The processor 114 repeats these steps to determine a feature context weight for each of the one or more features and for each of the contexts, such that the feature context weight indicates how likely the user will access content items with that feature in each of the contexts,

In one example, the processor 114 counts the number of times each context has occurred in a particular cyclical time. This way, the processor 114 creates a histogram for each context over the cyclical time. For example, this histogram shows that context 602 has been encountered for 30 times on a Monday morning but only 3 times during Monday lunchtime. The processor 114 can then determine an expected value, which is the time with the highest occurrence of a particular cluster and a standard variation. These values serve as context weights, that is, factors that can be used to augment the feature estimation by the context data.

The feature context weights above are context specific but not access time specific while the context weights are time specific. Therefore, the processor 114 determines feature weights that are associated with an access time by multiplying the context weight for that particular access time with the feature context weight. As a result, for each possible access time, the processor determines a separate feature weight.

Referring back the method of Fig, 5, the processor 114 then receives 504 content data, such as the recommendation feeds of Fig. 1. The content data includes for each of the multiple content items, such as videos, one or more features of the set of features. This means, the content data includes information that a content item is from a particular recommendation feed, or that a content item is tagged with a particular tag.

The processor 114 then determines 506 for each of the multiple content items the benefit value based on the feature weight for each feature of the set of features. In one example, the processor 114 determines the benefit value for multiple different access times. These benefit values are based on feature weights, which are associated with multiple different access times as explained earlier.

For example, the processor 114 receives a video meta-data in the "sport" recommendation feed that is tagged with "goal", The processor 114 determines the benefit value on Monday morning of that video by receiving the feature weights of the feature "sport" and the feature "goals" for Monday morning. The processor 114 adds the two feature weights to determine the combined benefit value of that video.

In one example, the processor receives features of content items that are already stored on the local data store and reduces the benefit value based on the received features. This way, content items with feature that are already downloaded in large numbers are not downloaded. For example, if 10 soccer videos are already downloaded, a further soccer video will have less benefit to the user and therefore attracts a reduced benefit value, such as a reduction of 10% per similar content item.

Other examples of algorithms that could be used for scoring the content are Naïve Bayesian classification and collaborative filtering.

In yet another example, the benefit value is based on a freshness parameter, such as a creation date. This may be achieved by associating particular features with a time criticality, such that these features only contribute to the benefit value if the content item has a recent creation date, that is, the content is fresh. For example, breaking news are time critical and not much use when they are three days old. Therefore, the tag "breaking news" only contributes positively to the benefit value if the video has been created within the last 6 hours. It is noted here that other features, such as a tag "United States" since it is news about the United States, may still contribute to the benefit value and may ever result in a high benefit value although the content is not fresh. Creation date in this context does not refer to the date the actual file was created or the final video data was released but to the date of the event that took place at that date to which the content item is related.

The feature weights may have further scaling factors such as factor determined by a content provider policy. For example, the policy could define a scaling factor for promotional content or subscription content, identified by a feature, such as "feed=sport".

The next step of method 400 in Fig. 4 is determining 404 for each of the multiple content items an estimated prefetching cost. It is to be understood that the step of determining the prefetching cost may be performed before, after or at the same time as the step of determining the benefit values. The prefetching cost is associated with a prefetching time and indicates the cost to download that content item at that prefetching time. In one example, the prefetching cost is associated with a downloading opportunity.

A similar learning process as explained with reference to Fig. 7 is applied to determine downloading opportunities at prefetching times. The processor 114 receives historic network status data of one or more networks. It is noted here that the processor 114 may receive the network data before, after or while receiving the historic user access data. The historic network data includes time-based download costs, which means that the data indicates the time at which a particular cost is to be paid when downloading over the network. This cost may be constant for all times under consideration. The networks may have context-based network parameters, which means that the parameters of the networks change with the context the user 130 is in. For example, the download speed of a telecommunications network 204 in Fig. 2 depends on the location of the user 130 because LTE coverage may be replaced by 3G coverage in rural areas. The download speed may also depend on the time of day since many user are downloading content items during certain times and thereby reducing the download speed.

As the user 130 travels or as the network parameters change while the user 130 is stationary, the processor 114 receives the network data and stores it on data store 118. In one example, the processor 114 periodically determines, such as every minute, the available networks and the associated network parameters and stores the network data. In a different example, the processor 114 is triggered to receive network parameters by external events, such as a change in network parameters.

Using the network data, the processor 114 trains a model for predicting future network parameters and in particular, downloading opportunities. In one example, the processor 114 clusters the received context data into clusters and counts the occurrence of these clusters for different cyclical times, This way, the processor 114 determines when there is a likelihood that a downloading opportunity is present. For each downloading opportunity, the processor 114 also determines a prefetching cost. For example, the processor 114 determines that free public Wifi is available in cluster 704 and that cluster 704 occurs mainly on Tuesday lunchtime. Therefore the cluster 704 represents a downloading opportunity on Tuesday lunchtime with zero cost. The download cost via an LTE network may be determined as a monetary value payable by the user, such as 0.05 $/MB.

The network operator may have a contract with the content provider and therefore, the sports feed items can be downloaded over off peak hours of cellular networks. This is expressed by a policy specifying a low cost to items with the feature "feed=sport". The policy may also prohibit some networks for some features and therefor assign a high number to that feature.

When the processor 114 selects a content item for downloading, the processor 114 also considers the distribution of download opportunities in the future, This way, if a video has a great benefit value associated with a late time, that occurs after two separate download opportunities, then this video does not need to be downloaded at the first opportunity but a different video with a possibly smaller benefit value may be downloaded first. However, if there is only one download opportunity, then the video with the greater benefit value will be downloaded first.

For example, the processor 114 has predicted that a particular content item will likely be accessed in 18 hours and has also predicted that a Wifi network with high download speed will be available in 12 hours. Therefore, the processor 114 determines that the prefetching opportunity is in 12 hours or that the prefetching opportunity is when the user 130 is located at a certain location or within range of a certain Wifi hotspot or LTE cell.

In one example, one of the internal resources to consider is battery state, that is, battery is charging or has enough power left to prefetch the content and keep the device usable until the time the device is estimated to be charged again. The processor 114 calculates the amount of content to prefetch to ensure that the user will have enough content to consume before the next opportunity for prefetching is likely to occur. This calculation takes into account the estimated accuracy of the recommendations, duration of each content, estimated time that the user will have to watch the videos, free storage capacity, available battery, cost of network bandwidth and the time until next prefetching. Additionally, it manages the deletion of old items to make space for new prefetched content. The decision to delete content is made based on, for example, the score, age and watched status of the content.

As a next step of method 400 in Fig. 4 the processor 114 selects 406 one of the multiple content items for downloading. The processor 114 accesses the benefit values of the videos, which are associated with an access time, and also accesses the prefetching costs at a prefetching time. Therefore, the processor 114 selects the content item based on the benefit values for each of the multiple content items and the prefetching cost at the prefetching time for each of the multiple content items. In one example, the processor 114 determines a combined measure of cost and benefit, such as by subtracting the prefetching cost from the benefit value and selects the content item that has the highest combined value. This way, processor 114 optimises the combined measure of cost and benefit for the prefetching time.

It is noted here that the prefetching time may be the current time, such that the processor 114 downloads the selected content item straight away. Alternatively, the prefetching time may be in the future.

In one example, the processor 114 determines an earlier prefetching cost and a later prefetching cost for each of the multiple content items. The earlier prefetching cost is associated with an earlier prefetching time and the later prefetching cost is associated with a later prefetching time. The processor 114 determines a combined measure of benefit for first and second content items and compares the two measures to a predetermined threshold. This threshold may be a minimum value that the content item needs to have in order to be considered for prefetching, In this example, the measure of the first content item is above the predetermined threshold associated with an access time before the later prefetching time. Further, the measure of the second content item is above a predetermined threshold associated with an access time after the later prefetching time. In this example, the processor 114 determines that the second content item does not need to be downloaded at the earlier prefetching time since a later prefetching opportunity is expected to come up. Therefore, the processor 114 selects the first content item over the second context item to be downloaded at the first prefetching time.

It is to be understood that "receiving" data also incorporates accessing the data on a data store, such as a volatile or non-volatile memory. The processor 114 requests the data and then receives the data as a reply from the data store. In one example, the processor 114 receives user access data from a data collector, such as a video viewing application. In a different example, the processor 114 accesses historic user access data stored on data memory 118. Historic user access data may be received by the processor 114 in real time, that is, every time the user 130 accesses a content item, the processor is notified. Alternatively, the historic access data may be accumulated on data memory 118 over a period of time and received by the processor 114 at a later stage. The historic user access data may be historic user access data of other users and may be received from other devices of the same user. In another example, the historic user access may be received from any application that runs on the mobile device, such as a browser, a video application or a third party App.

The user 130 starts a video viewing application and accesses video 128 to watch the video 128, such as by tapping the screen to select the video. To create the historic user access data, the video viewing application copies one item from item list 404 in Fig. 4 into a list representing the historic user access data. Each time the user accesses a video, a new entry is added to the list representing the historic user access data which therefore includes an indication of access of content items.

The historic user access data further includes an associated access context. The context in which the user 130 accesses the content item may comprise a variety of parameters either individually or in any combination. After the item from list 404 in Fig. 4 is copied into the list representing the historic user access data, the processor 114 stores the access context associated with the accessed content item. For example, the list representing the historic user access comprises separate columns or data fields for each sensor representing the access context. Alternatively, the processor 114 increments the count for each feature of the accessed content item for that context.

In one example, the context is completely defined by the cyclical access time, which can be defined, for example, by day of week and hour of day. Cyclical time means that cyclical repetitions are not considered separately. For example, all Mondays are considered together as a single context and accordingly, the other days of the week are considered as further contexts resulting in seven different contexts. The historic access data comprises for each accessed content item one or more features, such as tags, feed names and categories.

The period of time for which historic user access data is considered may be the last 20 days. This means that the processor 114 deletes older user access data, In one example, the different weekdays are not considered separately and the processor 114 counts the number of days each tag is accessed. For example, if a user 130 watches sports on 5 days of the last 20 days, the probability p that the user 130 watches sports at any day is $p_{news}$=5/20=0.25. The processor assumes that this probability stays constant over the predicted period of access time, such as for each of the coming 3 days.

While the processor 114 selects content items for downloading, the processor 114 also selects content items to present to the user such that content items are selected which the user is most likely to access in the current context. The processor 114 receives current sensor data to determine a current context, that is, a current cluster. The processor 114 determines based on the boundaries the cluster in which the current sensor data is located and retrieves the cluster identifier for that cluster. In the example of Fig. 7, when the processor 114 receives similarly high accelerometer samples, the processor 114 determines that the user 130 is in the first context 702.

If the historic access data indicates that the user 130 has been in context 502 for twenty times and has accessed news videos for 10 times when being in context 502, the probability p that the user accesses a news video when the user 130 is in context 502 is $p$=10/20=0.5.

A variety of events may trigger the processor 114 to update the clustering 700. In one example, a timer triggers the update, such that the clustering 700 is recomputed periodically once a day, for example when the device 112 is charging and idle. In another example, the update is triggered by a change in context, such as by the detection of the battery being charged or by the availability of new content items or the availability of data networks. In yet another example, the update is triggered by the accuracy of prediction going below a static or dynamic threshold.

Each time the processor 114 updates the clustering 500 the historic access data may be different, since access data that is older than a predetermined use-by date is deleted and new, recent access data is available. Therefore, the clustering 500 adapts to a change in user behaviour, Alternatively, new data can be given a larger importance than older data when calculating predictions. Further, instead of storing the old data for a window of time, by using online learning as opposed to batch learning, the old raw data may not need to be stored, only the parameters of the learning model, which are updated every time new data is added to the model.

In one example, the processor 114 determines the clustering 700 for each cyclical time separately, which means that one clustering 700 is stored in data store 118 for each of Monday morning, Monday lunchtime, Monday afternoon, Monday night, Tuesday morning, and so on. As a result, the processor 114 can determine a feature weight associated with an access time, such as a probability $p_i(t_k)$ that user 130 accesses content with feature $i$ at cyclical time $t_k$. The probabilities may be determined using a neural network or a support vector machine,

The processor may then determine an expected value to the user as $e_i(f_k) = v_i\, p_i(t_k)$ *size,* where $v_i$ is a value to the user or service provider and is provided as a policy, pushed to the client from the service provider. Prefetching policies are a set of rules which determine what content should be prefetched, in which networks or which parts of networks (e.g. cells) and at what times. Prefetching policies can be defined or set, for instance, by the user, the network operator, content providers, application providers, corporate IT departments, and many more. The prefetching policies can be rules created on the device, preloadcd at times of manufacturing, sales, or service provisioning. Alternatively, the policies can be pushed or pulled onto the device over the network or the policies can be stored on the network, so that the mobile device polls the rules every time a prefetching decision is made.

The value to the user $v_i$ may depend on a number of factors including the source of the content, its size and quality. It may also be used to create a preference for promotional or subscription content. The size is provided with the recommendations as described earlier. In another example, the expected value does not scale linearly with the size. Instead, the value to the user encompasses this implicitly, such as a I hour clip could be 30% more valuable if watched compared to a 30 minute clip.

The processor 144 adjusts the expected value by an adjustment factor $a_i(n_s)$, which is based on how many other similar videos $(n_s)$ there are. In one example, the user already has 10 soccer videos and therefore, the adjustment factor has a value of 0.65. The adjusted value is then $a_{vi}(t_k)=e_i(t_k)a_i(n_s)$.

The processor 114 further determines a download cost $c_i(t_k)$ for downloading content item i at time $t_k$ based on the available download opportunities, In one example, a cost per MB is known in from of a network policy, such as 0.85 \$/MB and the download cost is determined by multiplying the cost per MB by the size of the content item. Freely accessible Wifi networks are assigned a cost of 0 \$/MB.

In another example, the cost has multiple contributing factors as described earlier. The cost would then be calculated using a weighted sum of monetary, energy costs and opportunity costs. Further, the energy cost for the mobile would depend on the charging state and the battery level of the device.

$$C(I,t) \doteq c_m(I,t) + c_e(i,t) + c_o(i,t)$$

Where $c_m$ is the monetary cost, $c_e$ energy cost, which would be 0, if charging at time t, and correlate with the inverse of the battery level at time t, e.g. $c_e = 2$, if battery level =75% and $c_e$ =50, if battery level = 10%. $c_o$ is opportunity cost, which is 0 if device is idle (user not active) and otherwise depends on app the user is using, i.e. car game, 0, streaming a video, 10.

The processor 114 determines the cost based on a prediction of download opportunities in the future. The cost may be defined in a static policy defined on a per network access technology and per operator basis. It also may be queried over the network. The cost may be purely monetary or may take into account also the battery cost and impact on other applications, which would have to share the bandwidth.

The processor 114 then subtracts the cost from the adjusted value to derive at a final prediction value.

For example, a soccer game video will have adjusted expected value of $a_{vi}(t_k)=v_i{}^*p_i(t_k){}^*a_i(n_s)=100*0.65*0.65*50=2112.5$ and goal video 100*0.65*0.45 = 29.25.

The most expected value with minimal cost is gained by downloading the more time dependent last night's soccer game today:

$$a_v i(today) - c_i(today) = 100 * 0.65 - 0.85 = 65 - 0.85 = 64.15$$

and the soccer goal video tomorrow:

$$250* 0.45 - 0.85 = 112.5 - 0.85 = 111.65,$$

since it has the same expected value tomorrow afternoon.

Example

Fig. 8 illustrates an example schedule 800 of a weekday in the life of user 130. The user 130 wakes up at 7am, leaves home 802 at 8 am, and commutes for 45 minutes by bus 804 to office 806. User 130 visits the cafeteria 808 at 8:50am for 10 minutes and walks to the office 806. User 130 stays at office 806 from 9am to 5am. Takes bus 810 at 5:05, which takes 45 minutes back to home 802.

At home 802 no WiFi is available but operator LTE network 204, such as a 4G cellular network, The LTE network 204 corresponds to telecommunications network 204 in Fig. 2. Typically, the LTE network 204 has a light load during night, heavy load in evening and moderate load in morning. This load variation is represented by the step-like shape of the LTE network 204 in Fig. 8. The prefetching provider, that is, the provider of content server 206 in Fig. 2, has an agreement with the operator of the LTE network 204, that the LTE network 204 can be used for prefetching content, whenever and wherever the LTE network 204 has spare capacity, without billing the user 130. Instead, the prefetching service provider gets charged for the downloads, such as total size or number of prefetched content items, and the rate or price depends on the load of the LTE network 204 when the content items are downloaded. As a result, downloading content items during heavy load periods is more expensive than downloading the content items during light load periods.

During commute in bus 804 or 810 only the LTE network 204 is available. In some scenarios, the LTE network 204 may even change to a slower 3G network if parts of the journey are not covered by the LTE network 204.

At cafeteria 808 an operator managed WiFi network 822 is available while at office 806 an opportunistic WiFi network 824, such as a corporate network is available.

The processor 114 of computer system 112 in Fig. 1 uses the following context to detect and predict prefetching opportunities: LTE and 3G cell identifiers, cyclical time, power state, headphone presence and brightness, The processor 114 uses these context parameters to detect the situation the user is in and to predict the situations the user will likely be in.

The user 130 watches recent financial news 842 and interviews 844 in the morning on the bus for the duration of the ride. The content of news 842 comes from a subscription service, while the interviews 844 come from a free content service. The provider of the prefetching service has an agreement with the news provider to deliver these to the user 130 and the prefetching service provider gets paid for content being watched by the user.

User 130 watches and shares entertaining short video clips 846 with colleagues in cafeteria before work. These videos come from a popular video sharing website, such as YouTube.

On the commute back home on bus 810, user 130 watches sports videos 850 and 852 to relax after day at work, These videos come from a sports content subscription service, The provider of the prefetching service has an agreement with the sports content provider to deliver these to the user and the prefetching service provider gets paid for content being watched by the user.

In one example, the processor 114 of computer system 112 docs not learn the topics, such as tags, of these content items, but only that the content items are of distinct types which the user views in different situations. 'type of content' may be defined by any combination of content metadata, such as recency, duration, content description, publisher, social commentary, and characteristics of those people in a social network who have shared the content.

Processor 114 learns the user's 130 regular access patterns of content items, that is what content the user prefers in different, regularly occurring contexts or situations. The prefetching of content item is triggered by download opportunities.

At night, when the user 130 is at home 802, the LTE network 204 has nearly no traffic. The spare capacity in the LTE network 204 is detected by the network 204, which sends a message including an indication of the spare capacity as network status data to the mobile device 112 of the user.

The mobile device 112 receives the message including the network status data, wakes up the processor 114 performing the prefetching service. The processor 114 then downloads the content identified by the scoring service for the predicted context of the morning.

Based on the cyclical time, (4 am Tuesday) and LTE cell id, the processor 114 predicts that the user will be in a situation in which he is most likely to consume content from recommendation feeds for financial news, interview and entertaining short videos, before better connectivity is available for prefetching content, In other words, the situation is labelled in terms of the user content consumption preferences.

The system performs the prediction by analyzing the frequencies of situations in which the user consumes content in terms of cyclical time. This analysis reveals that the user consumes videos with a probability of 80% every Tuesday morning before noon. Further, the analysis finds that the user consumes on the average 10 minutes of news, 15 minutes of interviews and 5 minutes of entertaining videos.

As a second step, the system analyses the frequency of availability of prefetching opportunities on Tuesday mornings. This analysis shows that 90% of the time there are no prefetching opportunities before the content is consumed. These two analyses are combined to make a decision that enough content from news, interview, and entertainment feeds should be downloaded to offer the user different options to choose from.

In one example, the received network status data includes a network policy for the service, which specifies that only the subscription service news videos can be delivered over LTE network 204. The system 112 does not download interviews from the free content sharing service for the commute or short entertainment videos for the cafeteria visit over LTE network 204, since delivering these would not provide revenue to the prefetching service provider, in spite of the provider still needing to pay for the cost of delivering the content to the LTE operator. In contrast, the prefetching service provider does get paid by the content provider for delivering the subscription content.

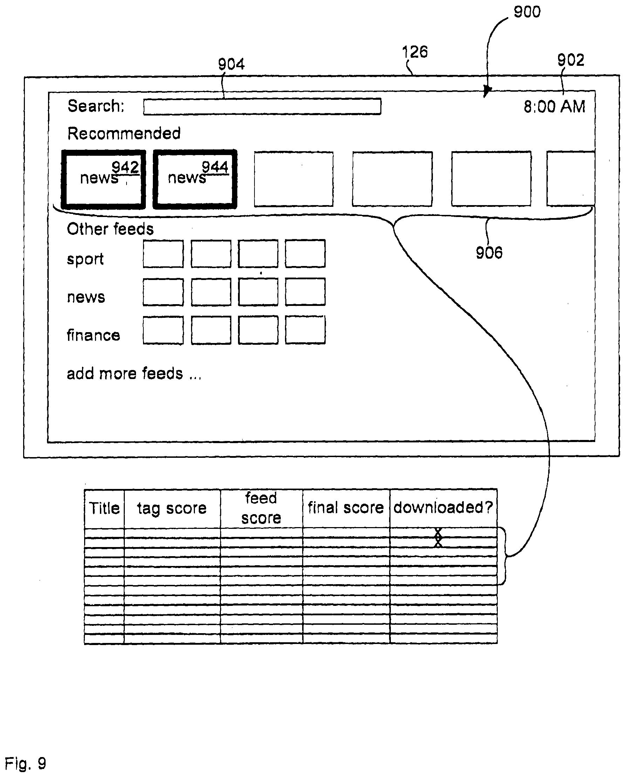

Fig. 9 illustrates a graphical user interface 900 of a video application displayed on screen 126. In addition to being used for prefetching, the content ranking mechanism is used also in the user interface to show the most appropriate content to the user. The user interface 900 comprises a time of day 902 and a search input field 904. Most importantly, the user interface 900 comprises a list of content items 906 that are most likely to be accessed by user 130 in the current context, such as time of day or situation.

Basic information is displayed for each item along with the thumbnail for the video. The scope of the basic information is dependent on the screen size. For example for a mobile phone, only the title and an icon for the person who posted the content would be displayed. On the other hand, on a tablet computer, the screen size would allow displaying additional information, such as likes, comments or reviews. A user can select to directly view a video from the list or to view additional information about the video, such as comments or likes on a mobile phone which could not be displayed on the list due to screen size limitations.

When the user launches the video application in the bus 504, the system detects the situation based on a combination of time of day, day of week, location and user using headphones as a situation where the user prefers to view news and accordingly displays fresh news related videos 942 and 944 prominently as the topmost items on the video preview screen. The prediction is made possible by the system 112 recording the video playback actions of the user in relation to the context data and training a model based on this data. The model gives scores or probabilities to the user viewing a video in a certain context. The model gives a probability of 80% that the user will view a news video and a probability of 65% that he will view an interview video.

The probabilities may also refer to a cluster of content that could mostly be labelled as 'News' or 'Comedy'.

The system 112 displays on screen 126 interviews 944 close to the top of the screen 126 along with the news 942 due to their slightly lower viewing probability. Relevant news items 942 and interviews 944 are recognized from features of the videos that have been present in videos that the user has viewed completely, liked or shared with friends before. These features are individual words and combinations of words derived from titles and textual descriptions of the videos, and also the sources of the video recommendations. The features are stored as key-value pairs, e.g. author:joe, tag:soccer, tag:goal, source:sports. The values can also be references, such as URLs pointing to other information e.g. rdf://foo.bar/actors/Elizabeth_Taylor. This makes it possible for the features to be represented as an information graph with links between features. For example, videos coming from a political blogger's social network stream that the user has subscribed to and liked videos from in the past would be ranked highly.

The system 112 recognizes the prefetch opportunity using the managed WiFi network in the cafeteria 808 before work. It predicts that the user will not be consuming content in the near future before getting access to the lower cost corporate network 824, and does not prefetch any content using the managed WiFi network 822. This is predicted similarly as explained above.

The system also recognizes the situation in the cafeteria 808 from the context data, such as cell id, cyclical time and headphones not on, and predicts that the user will want to view a video of short duration and prefers more entertaining content that can be easily shared with friends with a probability of 65%. These kinds of videos are then recommended to the user at the top of the preview screen. However, as the probability of the user viewing these kinds of videos is only moderately high, the system will also recommend other types of videos of short duration, such as news and sports because short duration of video is more important than topic.

In the office 806, the system 112 detects the office WiFi 822 and uses the prefetching opportunity to download sports content 850 and 852 for the afternoon commute 810. The system recognizes using cyclical time as context, that the next day is a weekday and predicts that the user will commute 804 to work 806 with a high probability and visit the cafeteria 808 with a medium probability. Due to the low cost of the office network 822 and availability of A/C power the system 112 then prefetches interview content for the next day's commute 804 and entertaining and non timely short videos 846 for the cafeteria 808, which can also be viewed the following days, if the user 130 does not visit the cafeteria 808 the next day.

On the commute 810 back home 802, the system 112 recognizes the situation from the context data (cell id, cyclical time and headphones on) and predicts that the user will want to view videos of sports with a probability of 73%. Sports videos are then suggested to the user and displayed prominently in the video preview screen at the top of the list. The recommendations are a mix of prefetched videos and real time sports available for streaming.

It will be appreciated by persons skilled in the art that numerous variations and/or modifications may be made to the specific embodiments without departing from the scope as defined in the claims,

It should be understood that the techniques of the present disclosure might be implemented using a variety of technologies. For example, the methods described herein may be implemented by a series of computer executable instructions residing on a suitable computer readable medium. Suitable computer readable media may include volatile (e.g. RAM) and/or non-volatile (e.g. ROM, disk) memory, carrier waves and transmission media. Exemplary carrier waves may take the form of electrical, electromagnetic or optical signals conveying digital data steams along a local network or a publically accessible network such as the internet.

It should also be understood that, unless specifically stated otherwise as apparent from the following discussion, it is appreciated that throughout the description, discussions utilizing terms such as "estimating" or "processing" or "computing" or "calculating", "optimizing" or "determining" or "displaying" or "maximising" or the like, refer to the action and processes of a computer system, or similar electronic computing device, that processes and transforms data represented as physical (electronic) quantities within the computer system's registers and memories into other data similarly represented as physical quantities within the computer system memories or registers or other such information storage, transmission or display devices.

References

Naive Bayesian Classification of Structured Data, Peter A. Flach and Nicolas Lachiche, in Journal of Machine Learning, pp. 233---269, December 2004.

**Claims**

1. A computer-implemented method for prefetching one of multiple content items (842) onto a mobile device (112) to make the content item (842) accessible from a local data store (118) of the mobile device (112), **characterised in that** the method comprises:

   (a) determining for each of the multiple content items multiple benefit values, each of the multiple benefit values being associated with one of multiple access times, the benefit values being based on an estimate of the likelihood of that content item to be accessed by a user at the associated access time;
   (b) determining for each of the multiple content items an estimated prefetching cost associated with a prefetching time, the prefetching cost indicating the cost to download that content item at the prefetching time; and
   (c) selecting one of the multiple content items for downloading at the prefetching time based on the benefit values for each of the multiple content items associated with the multiple access times and on the prefetching cost at the prefetching time for each of the multiple content items.

2. The computer-implemented method of claim 1, wherein step (c) comprises selecting the content item such that a combined measure of cost and benefit is optimised.

3. The computer-implemented method of any one of the preceding claims, further comprising:

   receiving historic network status data including time-based download costs,
   wherein step (b) comprises determining for each of the multiple content items multiple estimated prefetching costs associated with respective multiple prefetching times based on the historic network status data.

4. The computer-implemented method of any one of the preceding claims, wherein the prefetching cost is based on a network policy.

5. The computer-implemented method of claim 4, wherein step (b) comprises determining multiple prefetching costs for each of the multiple content items, each of the multiple prefetching costs being associated with one of the multiple prefetching times.

6. The computer-implemented method of claim 5 wherein
   step (b) comprises determining an earlier prefetching cost and a later prefetching cost for each of the multiple content items, the earlier prefetching cost being associated with an earlier prefetching time and the later prefetching cost being associated with a later prefetching time; and

step (c) comprises selecting one of the multiple content items such that a first content item is selected over a second content item where the first content item has a combined measure of benefit and cost above a predetermined threshold associated with an access time before the later prefetching time and the second content item has a combined measure of benefit and cost above a predetermined threshold associated with an access time after the later prefetching time.

7. The computer-implemented method of claim 5 or 6 wherein the prefetching cost is based on a monetary cost or on an energy cost.

8. The computer-implemented method of any one of the preceding claims, wherein step (a) further comprises:

receiving feature data including a set of features for describing content items and including for each feature of the set of features a feature weight associated with an access time;
receiving content data, including for each of the multiple content items one or more features of the set of features; and
determining for each of the multiple content items the benefit value based on the feature weight for each feature of the set of features.

9. The computer-implemented method of claim 8, further comprising
receiving for each feature and each of multiple contexts a feature context weight associated with that context, the feature context weight indicating how likely a feature is accessed by the user in that context;
receiving for each context a context weight associated with an access time, the context weight indicating how likely the context occurs at the associated access time; and
determining for each feature and for each context based on the context weight and the feature context weight a feature weight associated with an access time, the feature weight indicating how likely the user will access content items with that feature in each of the contexts.

10. The computer-implemented method of claim 9, further comprising:

receiving historic user access data including sensor data associated with access times when content items were accessed; and
determining contexts and context weights based on the sensor data, each of the context weights being associated with an access time.

11. The computer-implemented method of claim 10, wherein the historic user access data includes features of accessed content items and the method further comprises determining based on the received features and the determined contexts for each feature and for each context a feature context weight.

12. The computer-implemented method of any one of the claims 8 to 11, wherein the method further comprises:

receiving features of content items stored on the local data store; and
reducing the benefit value for content items to be prefetched based on the received features.

13. The computer-implemented method of any one of the preceding claims, wherein one or more of the benefit values is further based on a creation data of a content item.

14. A mobile device (112) for prefetching one of multiple content items (842) onto the mobile device (112) to make the content item (842) accessible from a local data store (118) of the mobile device (112), the mobile device (112) comprising a processor (114) **characterised in that** the processor is adapted to perform the steps

(a) to determine for each of the multiple content items multiple benefit values, each of the multiple benefit values being associated with one of multiple access times, the benefit values being based on an estimate of the likelihood of that content item to be accessed by a user at the associated access time;
(b) to determine for each of the multiple content items an estimated prefetching cost associated with a prefetching time, the prefetching cost indicating the cost to download that content item at the prefetching time; and
(c) to select one of the multiple content items for downloading at the prefetching time based on the benefit values for each of the multiple content items associated with the multiple access times and on the prefetching cost at the prefetching time for each of the multiple content items.

**Patentansprüche**

1. Computerimplementiertes Verfahren zum Vorabladen eines von mehreren Inhaltselementen (842) auf eine mobile Vorrichtung (112), um das Inhaltselement (842) aus einem lokalen Datenspeicher (118) der mobilen Vorrichtung (112) zugänglich zu machen, **dadurch gekennzeichnet, dass** das Verfahren umfasst:

   (a) Bestimmen mehrerer Nutzwerte für jedes der mehreren Inhaltselemente, wobei jeder der mehreren Nutzwerte einer von mehreren Zugriffszeiten zugeordnet ist, wobei die Nutzwerte auf einer Schätzung der Wahrscheinlichkeit beruhen, dass auf dieses Inhaltselement durch einen Anwender zu der zugeordneten Zugriffszeit zugegriffen wird;
   (b) Bestimmen geschätzter Prefetchkosten, die einer Prefetchzeit zugeordnet sind für jedes der mehreren Inhaltselemente, wobei die Prefetchkosten die Kosten für das Herunterladen des Inhaltselements zur Prefetchzeit angeben; und
   (c) Auswählen eines der mehreren Inhaltselemente zum Herunterladen zur Prefetchzeit anhand der Nutzwerte für jedes der mehreren Inhaltselemente, die den mehreren Zugriffszeiten zugeordnet sind, und der Prefetchkosten zur Prefetchzeit für jedes der mehreren Inhaltselemente.

2. Computerimplementiertes Verfahren nach Anspruch 1, wobei der Schritt (c) umfasst, das Inhaltselement derart auszuwählen, dass ein kombiniertes Kosten-Nutzen-Verhältnis optimiert wird.

3. Computerimplementiertes Verfahren nach einem der vorhergehenden Ansprüche, ferner umfassend:

   Empfangen von historischen Netzzustandsdaten, die zeitbasierte Downloadkosten enthalten,
   wobei Schritt (b) umfasst, für jedes der mehreren Inhaltselemente mehrere geschätzte Prefetchkosten, die den jeweiligen mehreren Prefetchzeiten zugeordnet sind, anhand der historischen Netzzustandsdaten zu bestimmen.

4. Computerimplementiertes Verfahren nach einem der vorhergehenden Ansprüche, wobei die Prefetchkosten auf einer Netzrichtlinie beruhen.

5. Computerimplementiertes Verfahren nach Anspruch 4, wobei Schritt (b) umfasst, mehrere Prefetchkosten für jedes der mehreren Inhaltselemente zu bestimmen, wobei jede der mehreren Prefetchkosten einer der mehreren Prefetchzeiten zugeordnet sind.

6. Computerimplementiertes Verfahren nach Anspruch 5, wobei
   Schritt (b) umfasst, frühere Prefetchkosten und spätere Prefetchkosten für jedes der mehreren Inhaltselemente zu bestimmen, wobei die früheren Prefetchkosten einer früheren Prefetchzeit zugeordnet sind und die späteren Prefetchkosten einer späteren Prefetchzeit zugeordnet sind; und
   Schritt (c) umfasst, eines der mehreren Inhaltselemente auszuwählen, so dass ein erstes Inhaltselement vor einem zweiten Inhaltselement ausgewählt wird, wenn das erste Inhaltselement ein kombiniertes Kosten-Nutzen-Verhältnis aufweist, das über einem vorbestimmten Schwellenwert liegt, der einer Zugriffszeit vor der späteren Prefetchzeit zugeordnet ist, und das zweite Inhaltselement ein kombiniertes Kosten-Nutzen-Verhältnis aufweist, das über einem vorbestimmten Schwellenwert liegt, der einer Zugriffszeit nach der späteren Prefetchzeit zugeordnet ist.

7. Computerimplementiertes Verfahren nach Anspruch 5 oder 6, wobei die Prefetchkosten auf monetären Kosten oder Energiekosten beruhen.

8. Computerimplementiertes Verfahren nach einem der vorhergehenden Ansprüche, wobei Schritt (a) ferner umfasst:

   Empfangen von Merkmalsdaten, die eine Gruppe von Merkmalen zum Beschreiben von Inhaltselementen enthalten und für jedes Merkmal der Gruppe von Merkmalen eine Merkmalgewichtung enthalten, die einer Zugriffszeit zugeordnet ist;
   Empfangen von Inhaltsdaten, die für jedes der mehreren Inhaltselemente ein oder mehrere Merkmale der Gruppe von Merkmalen enthalten; und
   Bestimmen des Nutzwerts für jedes der mehreren Inhaltselemente anhand der Merkmalsgewichtung für jedes Merkmal der Gruppe von Merkmalen.

9. Computerimplementiertes Verfahren nach Anspruch 8, ferner umfassend:

Empfangen einer Merkmalskontextgewichtung, die diesem Kontext zugeordnet ist für jedes Merkmal und jeden von mehreren Kontexten, wobei die Merkmalskontextgewichtung angibt, wie wahrscheinlich auf ein Merkmal durch den Anwender in diesem Kontext zugegriffen wird;

Empfangen einer Kontextgewichtung, die einer Zugriffszeit zugeordnet ist für jeden Kontext, wobei die Kontextgewichtung angibt, wie wahrscheinlich der Kontext zu der zugeordneten Zugriffszeit auftritt; und

Bestimmen einer Merkmalsgewichtung, die einer Zugriffszeit zugeordnet ist für jedes Merkmal und für jeden Kontext anhand der Kontextgewichtung und der Merkmalskontextgewichtung, wobei die Merkmalsgewichtung angibt, wie wahrscheinlich der Anwender auf Inhaltselemente mit diesem Merkmal in jedem der Kontexte zugreifen wird.

**10.** Computerimplementiertes Verfahren nach Anspruch 9, ferner umfassend:

Empfangen von historischen Anwenderzugriffsdaten, die den Zugriffszeiten zugeordnete Sensordaten enthalten, wenn auf Inhaltselemente zugegriffen wurde; und

Bestimmen von Kontexten und Kontextgewichtungen anhand der Sensordaten, wobei jede der Kontextgewichtungen einer Zugriffzeit zugeordnet ist.

**11.** Computerimplementiertes Verfahren nach Anspruch 10, wobei die historischen Anwenderzugriffsdaten Merkmale von Inhaltselementen, auf die zugegriffen wurde, enthalten und das Verfahren ferner umfasst, anhand der empfangenen Merkmale und der bestimmten Kontexte für jedes Merkmal und für jeden Kontext eine Merkmalskontextgewichtung zu bestimmen.

**12.** Computerimplementiertes Verfahren nach einem der Ansprüche 8 bis 11, wobei das Verfahren ferner umfasst:

Empfangen von Merkmalen von Inhaltselementen, die auf dem lokalen Datenspeicher gespeichert sind; und
Reduzieren des Nutzwerts für Inhaltselemente, die zum Prefetch vorgesehen sind, anhand der empfangenen Merkmale.

**13.** Computerimplementiertes Verfahren nach einem der vorhergehenden Ansprüche, wobei einer oder mehrere der Nutzwerte ferner auf Erstellungsdaten eines Inhaltselements beruhen.

**14.** Mobile Vorrichtung (112) für das Prefetching eines von mehreren Inhaltselementen (842) auf die mobile Vorrichtung (112), um das Inhaltselement (842) von einem lokalen Datenspeicher (118) der mobilen Vorrichtung (112) zugreifbar zu machen, wobei die mobile Vorrichtung (112) einen Prozessor (114) umfasst, **dadurch gekennzeichnet, dass** der Prozessor ausgelegt ist, die folgenden Schritte auszuführen:

(a) Bestimmen mehrerer Nutzwerte für jedes der mehreren Inhaltselemente, wobei jeder der mehreren Nutzwerte einer von mehreren Zugriffszeiten zugeordnet ist, wobei die Nutzwerte auf einer Schätzung der Wahrscheinlichkeit beruhen, dass auf dieses Inhaltselement durch einen Anwender zu der zugeordneten Zugriffszeit zugegriffen wird;

(b) Bestimmen geschätzter Prefetchkosten für jedes der mehreren Inhaltselemente, die einer Prefetchzeit zugeordnet sind, wobei die Prefetchkosten die Kosten für das Herunterladen dieses Inhaltselements zur Prefetchzeit angeben;und

(c) Auswählen eines der mehreren Inhaltselemente zum Herunterladen zur Prefetchzeit anhand der Nutzwerte für jedes der mehreren Inhaltselemente, die den mehreren Zugriffszeiten zugeordnet sind, und der Prefetchkosten zur Prefetchzeit für jedes der mehreren Inhaltselemente.

## Revendications

**1.** Procédé informatisé de pré-extraction de l'un parmi de multiples éléments de contenu (842) sur un dispositif mobile (112) pour rendre l'élément de contenu (842) accessible à partir d'une mémoire de données locale (118) du dispositif mobile (112), **caractérisé en ce que** le procédé comprend :

(a) la détermination, pour chacun des multiples éléments de contenu, de multiples valeurs d'avantage, chacune des valeurs d'avantage étant associée à l'un des multiples instants d'accès, les valeurs d'avantage étant basées sur une estimation de la probabilité qu'un utilisateur accède à cet élément de contenu à l'instant d'accès associé,

(b) la détermination, pour chacun des multiples éléments de contenu, d'un coût de pré-extraction estimé associé à un instant de pré-extraction, ledit coût de pré-extraction indiquant le coût du téléchargement de ce même élément de contenu à l'instant de pré-extraction et

(c) la sélection de l'un des multiples éléments de contenu pour un téléchargement à l'instant de pré-extraction sur la base des valeurs d'avantage pour chacun des multiples éléments de contenu associés aux multiples instants d'accès et du coût de pré-extraction à l'instant de pré-extraction pour chacun des multiples éléments de contenu.

2. Procédé informatisé selon la revendication 1, dans lequel l'étape (c) comprend la sélection de l'élément de contenu de telle façon qu'une mesure combinée du coût et de l'avantage est optimisée.

3. Procédé informatisé selon l'une quelconque des revendications précédentes, comprenant en outre :

la réception de données historiques de statut de réseau incluant les coûts de téléchargement au temps passé, dans lequel l'étape (b) comprend la détermination, pour chacun des multiples éléments de contenu, de multiples coûts de pré-extraction estimés associés aux multiples instants de pré-extraction sur la base des données historiques de statut de réseau.

4. Procédé informatisé selon l'une quelconque des revendications précédentes, dans lequel le coût de pré-extraction est basé sur une politique de réseau.

5. Procédé informatisé selon la revendication 4, dans lequel l'étape (b) comprend la détermination de multiples coûts de pré-extraction pour chacun des multiples éléments de contenu, chacun des multiples coûts de pré-extraction étant associé à l'un des multiples instants de pré-extraction.

6. Procédé informatisé selon la revendication 5, dans lequel
l'étape (b) comprend la détermination d'un coût de pré-extraction antérieur et d'un coût de pré-extraction postérieur pour chacun des multiples éléments de contenu, le coût de pré-extraction antérieur étant associé à un instant de pré-extraction antérieur et le coût de pré-extraction postérieur étant associé à un instant de pré-extraction postérieur et
l'étape (c) comprend la sélection de l'un des multiples éléments de contenu, de telle sorte qu'un premier élément de contenu est choisi de préférence à un second élément de contenu, lorsque le premier élément de contenu a une mesure combinée d'avantage et de coût supérieure à un seuil prédéterminé associé à un instant d'accès précédant l'instant de pré-extraction postérieur et le second élément de contenu a une mesure combinée d'avantage et de coût supérieure à un seuil prédéterminé associé à un instant d'accès ultérieur au coût de pré-extraction postérieur.

7. Procédé informatisé selon la revendication 5 ou 6, dans lequel le coût de pré-extraction est basé sur un coût monétaire ou sur un coût énergétique.

8. Procédé informatisé selon l'une quelconque des revendications précédentes, dans lequel l'étape (a) comprend en outre :

la réception de données de caractéristiques incluant un jeu de caractéristiques destinées à décrire les éléments de contenu et incluant, pour chaque caractéristique du jeu de caractéristiques, une pondération de caractéristiques associée à un instant d'accès,
la réception de données de contenu, incluant, pour chacun des multiples éléments de contenu, une ou plusieurs caractéristique(s) du jeu de caractéristiques et
la détermination, pour chacun des multiples éléments de contenu, de la valeur d'avantage basée sur la pondération de caractéristiques, pour chaque caractéristique du jeu de caractéristiques.

9. Procédé informatisé selon la revendication 8, comprenant en outre :

la réception, pour chaque caractéristique, et chacun des multiples contextes, d'une pondération de contexte de caractéristique associée à ce contexte, la pondération de contexte de caractéristique indiquant quelle est la probabilité qu'un utilisateur accède à une caractéristique dans ce même contexte,
la réception, pour chaque contexte, d'une pondération de contexte associée à un instant d'accès, la pondération de contexte indiquant quelle est la probabilité qu'un contexte se produise à l'instant d'accès associé et
la détermination, pour chaque caractéristique et pour chaque contexte basé sur la pondération de contexte et la pondération de contexte de caractéristique, une pondération de caractéristique associée à un instant d'accès, ladite pondération de caractéristique indiquant quelle est la probabilité qu'un utilisateur accède aux éléments de contenu avec cette caractéristique dans chacun des contextes.

10. Procédé informatisé selon la revendication 9, comprenant en outre :

la réception de données d'historique de l'accès d'utilisateur incluant des données de capteur associées aux instants d'accès lorsqu'on a eu accès aux éléments de contenu et
la détermination des contextes et des pondérations de contexte sur les données de capteur, chacune des pondérations de contexte étant associée à un instant d'accès.

11. Procédé informatisé selon la revendication 10, dans lequel les données d'historique de l'accès d'utilisateur incluent les caractéristiques des éléments de contenu auxquels on a eu accès, et le procédé comprend en outre la détermination basée sur les caractéristiques reçues et les contextes déterminés pour chaque caractéristique et pour chaque contexte une pondération de contexte de caractéristique.

12. Procédé informatisé selon l'une quelconque des revendications 8 à 11, dans lequel le procédé comprend en outre :

la réception des caractéristiques des éléments de contenu stockés dans la mémoire de données locale et
la réduction de la valeur d'avantage pour les éléments de contenu qui doivent être pré-extraits sur la base des caractéristiques reçues.

13. Procédé informatisé selon l'une quelconque des revendications précédentes, dans lequel une ou plusieurs des valeur(s) d'avantage est/sont en outre basée(s) sur une donnée de création d'un élément de contenu.

14. Dispositif mobile (112) permettant de procéder à une pré-extraction de multiples éléments de contenu (842) sur le dispositif mobile (112) afin de rendre l'élément de contenu (842) accessible à partir d'une mémoire de données locale (118) du dispositif mobile (112), ledit dispositif mobile (112) comprenant un processeur (114) **caractérisé en ce que** ledit processeur est apte à effectuer les étapes suivantes :

(a) déterminer, pour chacun des multiples éléments de contenu des multiples valeurs d'avantage, chacune des multiples valeurs d'avantage étant associée à l'un des multiples instants d'accès, lesdites valeurs d'avantage étant basées sur une estimation de la probabilité qu'un utilisateur accède à cet élément de contenu à l'instant d'accès associé,
(b) déterminer, pour chacun des multiples éléments de contenu, un coût de pré-extraction estimé associé à un instant de pré-extraction, ledit coût de pré-extraction indiquant le coût du téléchargement de ce même élément de contenu à l'instant de pré-extraction et
(c) sélectionner l'un des multiples éléments de contenu pour un téléchargement à l'instant de pré-extraction sur la base des valeurs d'avantage pour chacun des multiples éléments de contenu associés aux multiples instants d'accès et du coût de pré-extraction à l'instant de pré-extraction pour chacun des multiples éléments de contenu.

Fig. 1

Fig. 2

| 402 Feed name | 414 | 416 | 418 | 420 | 422 | |
| --- | --- | --- | --- | --- | --- | --- |
| 412 Title | Generation time | tags | size | bitrate | link to download location | |
| | | | | | | |
| | | | | | | |
| | | | | | | |
| | | | | | | |

404

Fig. 3

Fig. 4

| determine for each of the multiple content items a benefit value associated with an access time, the benefit value being an estimate of the likelihood of that content item to be accessed by the user at the access time; | 402 |
| --- | --- |
| determine for each of the multiple content items an estimated prefetching cost associated with a prefetching time, the prefetching cost indicating the cost to download that content item at the prefetching time | 404 |
| select one of the multiple content items for downloading at the associated prefetching time based on the benefit values for each of the multiple content items and the prefetching cost at the prefetching time for each of the multiple content items | 406 |

500

┌─────────────────────────────────────────────┐
│   receive feature data including a set of features for   │
│ describing content items and including for each feature of │
│  the set of features a feature weight associated with an   │  ⟋502
│                    access time;                      │
└─────────────────────────────────────────────┘
                          │
                          ▼
┌─────────────────────────────────────────────┐
│   receive content data, including for each of the multiple   │
│  content items one or more features of the set of features   │  ⟋504
└─────────────────────────────────────────────┘
                          │
                          ▼
┌─────────────────────────────────────────────┐
│    determine for each of the multiple content items the     │
│ benefit value based on the feature weight for each feature  │  ⟋506
│                  of the set of features.                   │
└─────────────────────────────────────────────┘

Fig. 5

600

┌─────────────────────────────────────────────┐
│   receive for each feature and each context a feature    │
│  context weight associated with that context; the feature  │
│ context weight indicating how likely a feature is accessed │  ⟋602
│             by the user in the associated context          │
└─────────────────────────────────────────────┘
                          │
                          ▼
┌─────────────────────────────────────────────┐
│  receive for each context a context weight associated with  │
│ an access time, the context weight indicating how likely  │  ⟋604
│       the context occurs at the associated access time      │
└─────────────────────────────────────────────┘
                          │
                          ▼
┌─────────────────────────────────────────────┐
│ determine for each feature and for each context based on │
│    the context weight and the feature context weight a     │
│    feature weight associated with an access time, the      │  ⟋606
│  feature weight indicating how likely the user will access  │
│  content items with that feature in each of the contexts   │
└─────────────────────────────────────────────┘

Fig. 6

Fig. 7

Fig. 8

900

126

904

902

Search: [_____]                    8:00 AM

Recommended

[ news 942 ] [ news 944 ] [        ] [        ] [        ] [        ]

906

Other feeds

sport    [  ] [  ] [  ] [  ]

news     [  ] [  ] [  ] [  ]

finance  [  ] [  ] [  ] [  ]

add more feeds ...

| Title | tag score | feed score | final score | downloaded? |
|-------|-----------|------------|-------------|-------------|
|       |           |            |             | X           |
|       |           |            |             |             |
|       |           |            |             |             |
|       |           |            |             |             |
|       |           |            |             |             |
|       |           |            |             |             |
|       |           |            |             |             |
|       |           |            |             |             |

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20100005046 A

**Non-patent literature cited in the description**

• **PETER A. FLACH ; NICOLAS LACHICHE.** *Journal of Machine Learning,* December 2004, 233-269